# EUROPEAN PATENT APPLICATION

(11) **EP 4 852 194 A1**
(43) Date of publication of application: **09.12.2026**
(21) Application number: 25748374.3
(22) Date of filing: 17.01.2025
(51) Int. Cl.: H01M 50/367, H01M 50/204, H01M 50/209, H01M 50/213, H01M 50/242, H01M 50/289, H01M 50/291, H01M 50/293, H01M 50/342, H01M 50/35, H01M 50/358, H01M 50/383, H01M 50/507

(54) **BATTERY PACK**

(30) Priority: 31.01.2024 JP 2024013413
(71) Applicant: Panasonic Intellectual Property Management Co., Ltd., Kadoma-shi, Osaka 571-0057 (JP)
(72) Inventor: SUMI, Tatsuya, Osaka 571-0057 (JP); MATSUSHITA, Fumiya, Osaka 571-0057 (JP); NAITO, Atsushi, Osaka 571-0057 (JP); NORIMINE, Shota, Osaka 571-0057 (JP); HIRANO, Tatsuya, Osaka 571-0057 (JP)
(74) Representative: Eisenführ Speiser
(86) International application number: PCT/JP2025/001408
(87) International publication number: WO 2025/164378

(57) **Abstract**

A battery pack includes: secondary battery cells each including cell end surfaces one of which is provided with a gas exhaust valve configured to open in response to an increase in the internal pressure; a battery holder including a main surface and holding the secondary battery cells; an outer casing accommodating the battery holder holding the secondary battery cells therein; and a heat-resistant spacer disposed on the main surface of the battery holder and between the outer casing and the main surface. The spacer forms a gas exhaust space between the inner surface of the outer casing and the main surface of the battery holder. The gas exhaust space is for discharging gas released from the gas exhaust valve.

## Description

### TECHNICAL FIELD

The present disclosure relates to battery packs.

### BACKGROUND ART

Battery packs including rechargeable secondary battery cells such as lithium-ion secondary batteries accommodated in outer casings are used for driving electrical devices in various applications (for example, PTLs 1 and 2). These battery packs are configured such that if an anomaly occurs in any of the secondary battery cells accommodated in the outer casing and a high-pressure gas is generated inside an outer covering can of the battery pack, a gas exhaust valve disposed on the outer covering can is opened. There is a need for structures that allow the high-pressure gas released into the outer casing at this time to be discharged from the outer casing to the exterior.

However, in recent years, there has been a demand for smaller, lighter battery packs, and providing the necessary space for gas discharge has been challenging.

### CITATION LIST

### Patent Literature

PTL 1: Japanese Patent Laid-Open Publication No. 2016-072039
PTL 2: Japanese Patent Laid-Open Publication No. 2017-212065

### SUMMARY OF INVENTION

An object of the present disclosure is to provide a battery pack in which the space for gas discharge is readily provided. Another object of the present disclosure is to provide a battery pack with high reliability. The description of these aims and objects of the present disclosure does not preclude the existence of other aims and objects. An embodiment of the present disclosure does not need to achieve all of these objects. Furthermore, other objects can be extracted from the specification, the drawings, and the claims of the present disclosure.

A battery pack according to an aspect of the present disclosure includes: a plurality of secondary battery cells each including cell end surfaces one of which includes a gas exhaust valve that opens in response to an increase in an internal pressure; a battery holder including a main surface and holding the plurality of secondary battery cells; an outer casing accommodating the battery holder holding the plurality of secondary battery cells therein; and a spacer disposed on the main surface of the battery holder and between the outer casing and the main surface. The spacer is resistant to heat. The spacer forms a gas exhaust space between an inner surface of the outer casing and the main surface of the battery holder. The gas exhaust space is configured to discharge gas released from the gas exhaust valve.

In the battery pack according to the aspect of the present disclosure, the gas exhaust space is readily formed using the spacer between the inner surface of the outer casing and the main surface of the battery holder.

### BRIEF DESCRIPTION OF DRAWINGS

FIG. 1 is a perspective view of a battery pack according to Exemplary Embodiment 1.
FIG. 2 is a perspective view of the battery pack shown in FIG. 1, as seen from the rear.
FIG. 3 is a cross-sectional view of the battery pack along line III-III shown in FIG. 1.
FIG. 4 is a cross-sectional view of the battery pack along line IV-IV shown in FIG. 1.
FIG. 5 is an exploded perspective view of an outer casing of the battery pack shown in FIG. 1.
FIG. 6 is a perspective view of an inner bag shown in FIG. 5, as seen from the rear.
FIG. 7 is a plan view of the inner bag shown in FIG. 6.
FIG. 8 is a developed view of a protective sheet shown in FIG. 6.
FIG. 9 is an exploded perspective view of the inner bag shown in FIG. 5.
FIG. 10 is an exploded perspective view of a battery module shown extracted from the inner bag of FIG. 9.
FIG. 11 is a plan view of the battery module shown in FIG. 10.
FIG. 12 is a rear view of the battery module shown in FIG. 10.
FIG. 13 is an exploded perspective view of the battery module shown in FIG. 10 with a spacer shown detached therefrom.
FIG. 14 is an exploded perspective view of the battery holder shown in FIG. 13 with lead plates shown detached from therefrom.
FIG. 15 is another exploded perspective view of the battery holder shown in FIG. 14.
FIG. 16 is a perspective view of the spacer.

### DESCRIPTION OF EMBODIMENT

An exemplary embodiment of the present disclosure may be specified by configurations, features, and the like indicated below.

In a battery pack according to another aspect of the present disclosure in the above aspect, the spacer is made of flexible material. This configuration ensures that even when an external force is applied to the battery pack, the flexible spacer absorbs an external force to protect the battery holder.

In a battery pack according to another aspect of the present disclosure in any one of the above aspects, the spacer is disposed on at least cell surfaces of the cell end surfaces of the plurality of secondary battery cells on which the gas exhaust valve is not provided. In this configuration, when gas is discharged from the gas exhaust valve, the spacer is prevented from obstructing the gas release, allowing the smooth gas release to be maintained while adding the spacer to the battery holder.

A battery pack according to another aspect of the present disclosure in any one of the above aspects further includes a protective sheet covering a pair of main surfaces of the battery holder. The protective sheet continuously covers the main surface and at least a portion of the side surface connected to the main surface. The protective sheet covers the cell end surfaces each provided with the gas exhaust valve. In this configuration, the protective sheet that covers the battery holder to enhance impact resistance is used to cover the cell end surfaces each provided with the gas exhaust valve. Even when a high-temperature, high-pressure gas is discharged from the gas exhaust valve on any of the secondary battery cells, the protective sheet prevents flame leakage.

In a battery pack according to another aspect of the present disclosure in any one of the above aspects, the protective sheet has at least one first opening provided therein, and at least one of the plurality of second cell end surfaces on which the spacer is not disposed is exposed from the protective sheet through the at least one first opening. In this configuration, if a high-temperature, high-pressure gas is discharged from the gas exhaust valve on any of secondary battery cells, the gas is not directly discharged from the cell end surface provided with the gas exhaust valve, but the gas is discharged after moving to the position of another cell end surface; thus, the gas flow path is extended to reduce gas velocity and temperature, and the gas is expected to be discharged to the exterior more safely.

Particularly, gas restriction and discharge can be balanced while the protective sheet covers the cell end surfaces provided with the gas exhaust valves to reduce the occurrence of flame leakage.

A battery pack according to another aspect of the present disclosure in any one of the above aspects further includes a lead plate connecting the cell end surfaces of the plurality of secondary battery cells to one another. The battery holder includes a guide wall provided on the main surface of the battery holder, the guide wall positioning the lead plate at a position where the lead plate is fixed. The spacer is fixed to the main surface of the battery holder along the guide wall. In this configuration, the guide wall positioning the lead plate can also be used for positioning the spacer.

In a battery pack according to another aspect of the present disclosure in any one of the above aspects, the spacer has a wavy shape in a plan view.

In a battery pack according to another aspect of the present disclosure in any one of the above aspects, the spacers are spaced apart from one another and fixed to the main surface of the battery holder.

In a battery pack according to another aspect of the present disclosure in any one of the above aspects, the spacer extends on the main surface of the battery holder to cover the plurality of second cell end surfaces adjacent to each other such that the spacer forms a space between the spacer and an end of the main surface of the battery holder. In this configuration, the space is formed without completely partitioning the main surface of the battery holder by the spacer and thus, if gas is discharged from the gas exhaust valve, the gas discharged along the main surface of the battery holder can be prevented from being blocked by the spacer, allowing the smooth gas release to be maintained while adding the spacer to the battery holder.

A battery pack according to another aspect of the present disclosure in any one of the above aspects further includes an inner bag covering an outer periphery of the battery holder inside the outer casing, the inner bag being waterproof. The spacer is disposed inside the inner bag. In this configuration, a gas exhaust space is formed inside the inner bag while the battery holder is accommodated in the inner bag to provide a watertight seal and thus, the gas discharge can be maintained.

In a battery pack according to another aspect of the present disclosure in any one of the above aspects, the spacer is shorter than a width of the battery holder in a lateral direction of the battery holder. The spacer forms a space between an edge of the main surface of the battery holder and an end of the spacer. In this configuration, by leaving the cell end surface at the outermost end uncovered by the spacer, the inner bag can be prevented from rupturing due to excessive load thereon.

In a battery pack according to another aspect of the present disclosure in any one of the above aspects, the spacer is fixed to the main surface of the battery holder via an adhesive layer.

In a battery pack according to another aspect of the present disclosure in any one of the above aspects, the spacer is made of a heat-resistant rubber sheet.

In a battery pack according to another aspect of the present disclosure in any one of the above aspects, the spacer is made of a chloroprene-based rubber sheet.

In a battery pack according to another aspect of the present disclosure in any one of the above aspects, the spacer has an identical shape on each main surface of the battery holder. In this configuration, the spacers have the identical shape on both sides of the battery holder and thus, the number of components required for the assembly can be reduced.

Hereinafter, an exemplary embodiment of the present disclosure will be described with reference to the drawings. Note that the exemplary embodiment described below is a mere illustration for embodying the technical idea of the present disclosure; the present disclosure is not limited to that described below. The present specification should not be considered limiting in any way the members recited in the claims to the members indicated in the exemplary embodiment. In particular, the dimensions, materials, shapes, and relative positioning of components indicated in the exemplary embodiment are not intended to limit the scope of the present disclosure thereto, but are merely exemplary, unless otherwise specifically noted. Note that there are cases where the size, and positional relationship of the members illustrated in the drawings are exaggerated for clarity of explanation. Furthermore, in the following description, the same name and reference signs indicate the same or similar members, and detailed description thereof will be omitted, as appropriate. Moreover, the elements included in the present disclosure may be realized by forming two or more elements out of the same member so that one member functions as two or more elements or by allocating the functions of one member to two or more members.

The battery pack according to the present disclosure can be used as a power supply for driving movable bodies such as an electric cart, and an electric scooter, and a power-assisted bicycle, a power supply for radios, a power supply for portable electrical devices such as an electric cleaner and an electric tool, a backup power supply of a server for stationary energy storage usage, or a power supply device for homes, offices, and factories, and can also be used as a power supply for driving vehicles such as a hybrid vehicle and an electric vehicle, for example. Hereinafter, a battery pack to be used as a power supply for driving an electric motorcycle will be described as one exemplary embodiment of the present invention.

### Exemplary Embodiment 1

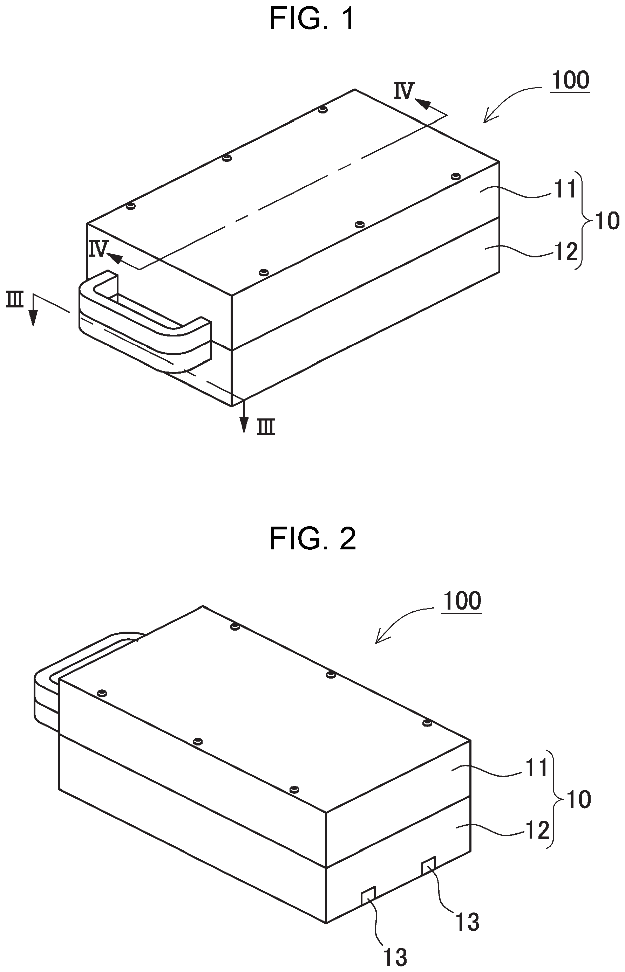

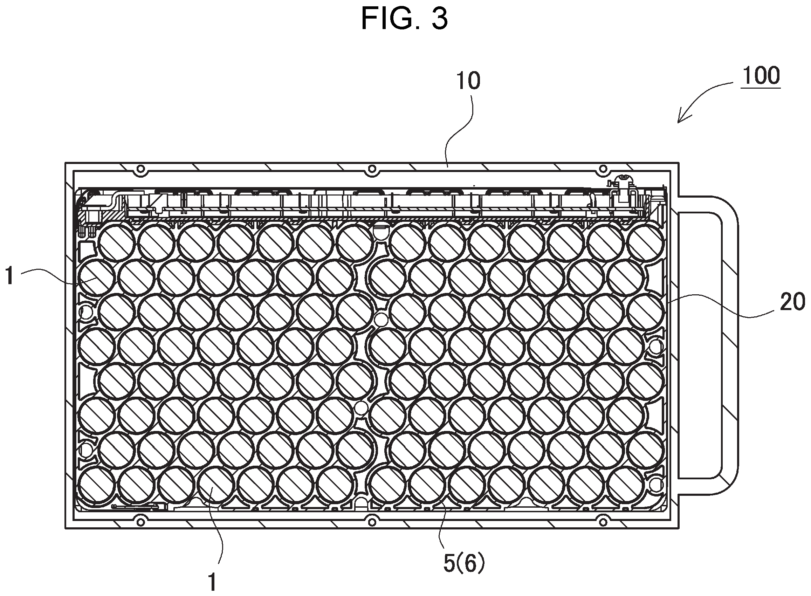

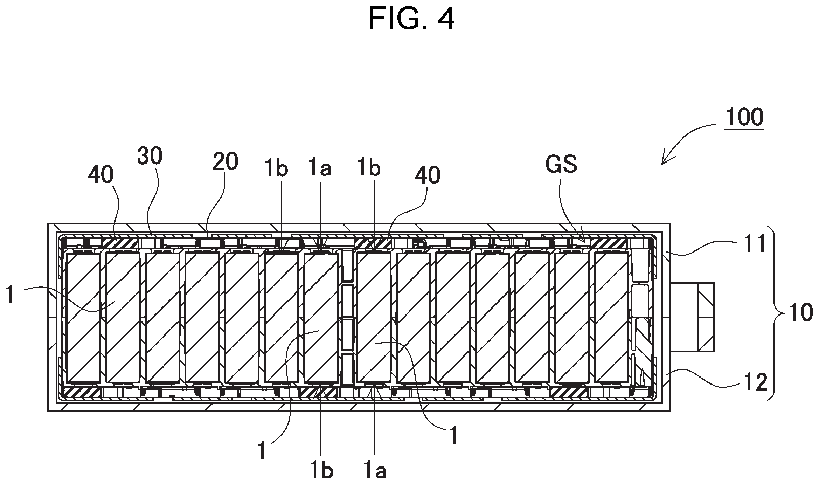

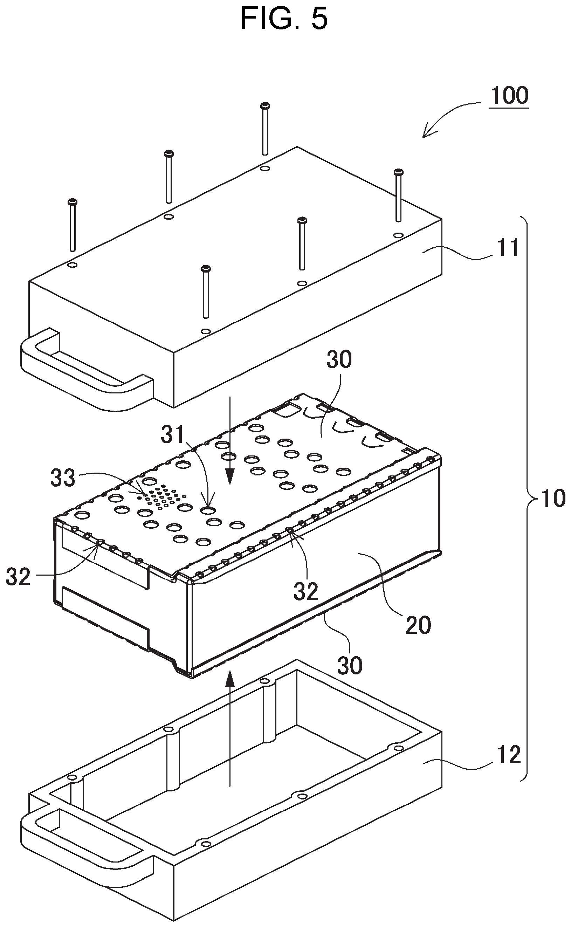

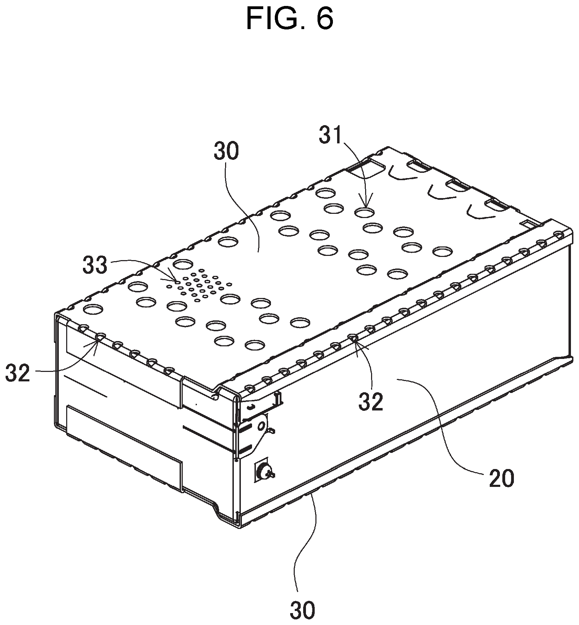

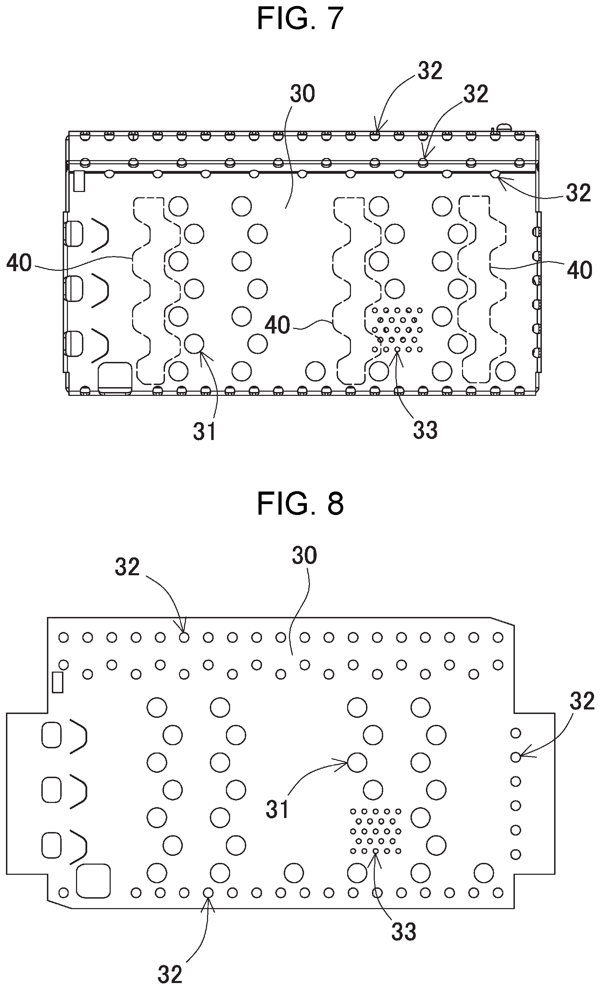

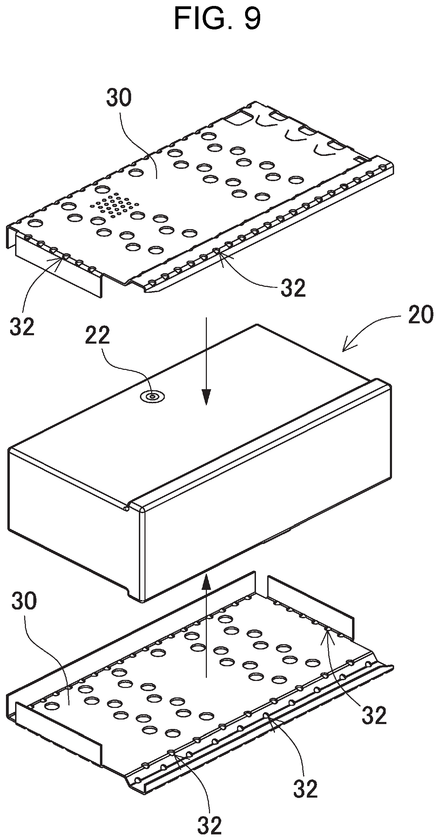

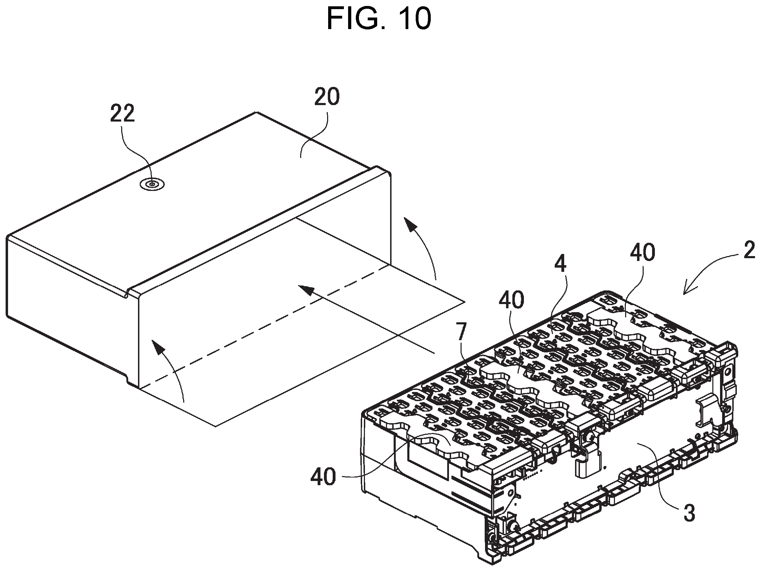

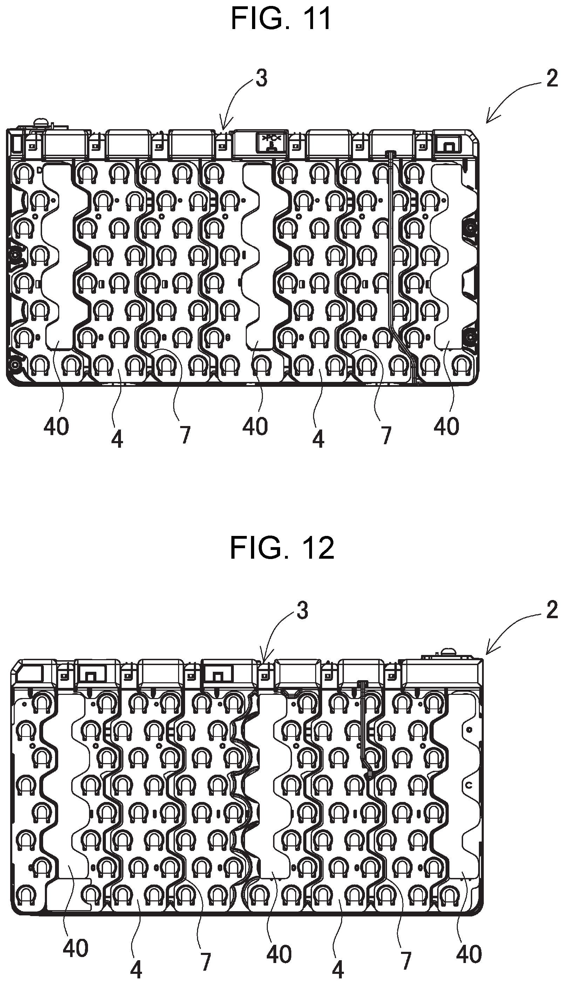

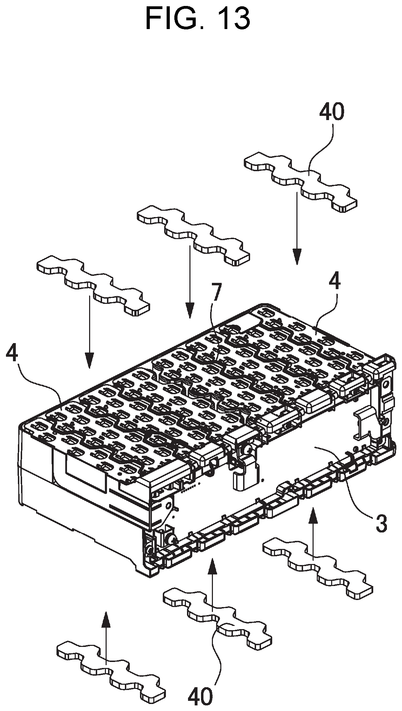

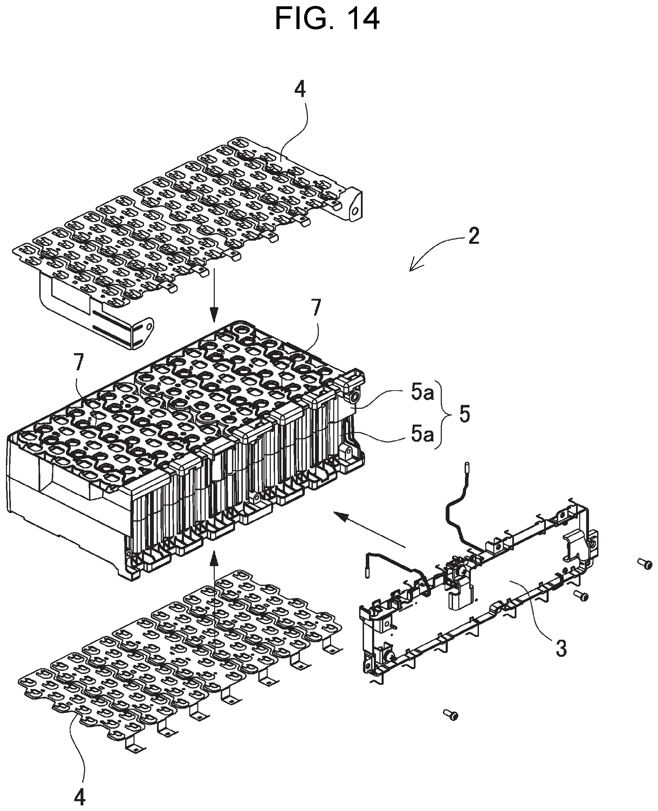

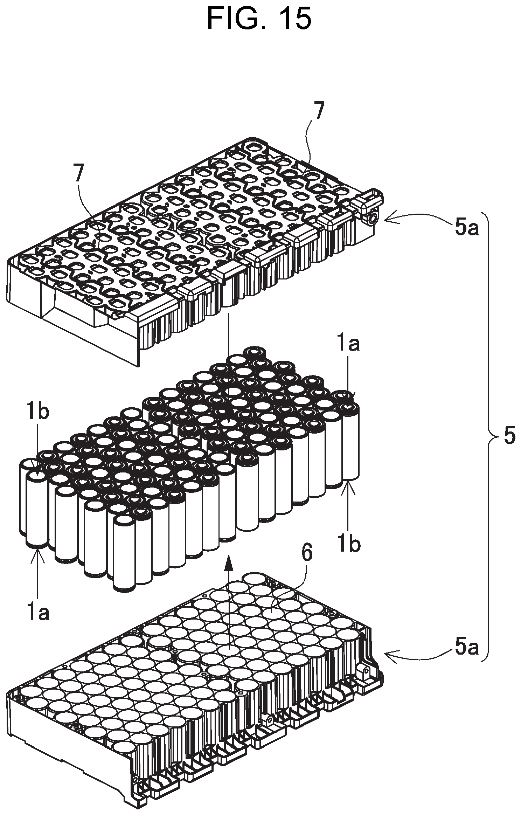

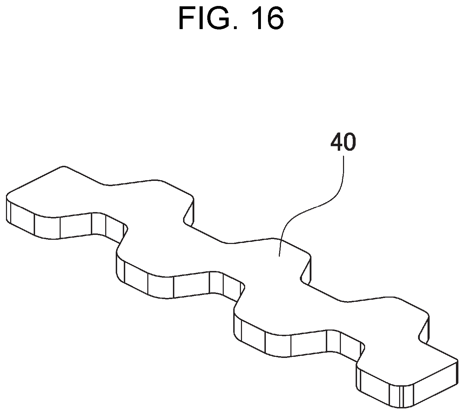

FIGS. 1 to 16 illustrate battery pack 100 according to Exemplary Embodiment 1 of the present disclosure. FIG. 1 is a perspective view of battery pack 100 according to Embodiment 1. FIG. 2 is a perspective view of battery pack 100 shown in of FIG. 1, as seen from the rear. FIG. 3 is a cross-sectional view of the battery pack along line III-III shown in FIG. 1. FIG. 4 is a cross-sectional view of the battery pack along line IV-IV shown in FIG. 1. FIG. 5 is an exploded perspective view of outer casing 10 of battery pack 100 shown in FIG. 1. FIG. 6 is a perspective view of inner bag 20 shown in FIG. 5, as seen from the rear. FIG. 7 is a plan view of inner bag 20 shown in FIG. 6. FIG. 8 is a developed view of protective sheet 30 shown in FIG. 6. FIG. 9 is an exploded perspective view of inner bag 20 shown in FIG. 5. FIG. 10 is an exploded perspective view of battery module 2 shown extracted from inner bag 20 shown in FIG. 9. FIG. 11 is a plan view of battery module 2 shown in FIG. 10. FIG. 12 is a rear view of battery module 2 shown in FIG. 10. FIG. 13 is an exploded perspective view of battery module 2 shown in FIG. 10, with spacers 40 shown detached therefrom. FIG. 14 is an exploded perspective view of battery holder 5 shown in FIG. 13, with lead plates 4 shown detached from therefrom. FIG. 15 is another exploded perspective view of battery holder 5 shown in FIG. 14. FIG. 16 is a perspective view of spacer 40. Battery pack 100 illustrated in these figures includes outer casing 10 and inner bag 20.

### Outer Casing 10

Outer casing 10 accommodates inner bag 20 therein. Outer casing 10 may have any external profile that provides an internal housing space. In the example illustrated in FIGS. 1 to 4, outer casing 10 has a box shape elongated in a direction. Box-shaped outer casing 10 is separable vertically or laterally into two parts: upper casing 11 and lower casing 12. Outer casing 10 is preferably made of highly insulating material, for example, a resin such as polycarbonate (PC) or a polycarbonate-acrylonitrile butadiene styrene (PC-ABS) alloy. Alternatively, outer casing 10 may be made of metal of aluminum or an alloy thereof. The internal space accommodating inner bag 20 therein is provided inside outer casing 10, as illustrated in FIG. 5.

### Inner Bag 20

Inner bag 20 covers the outer periphery of battery holder 5 inside outer casing 10. Inner bag 20, which is waterproof, provides a watertight seal for secondary battery cell 1 accommodated in outer casing 10. Therefore, inner bag 20 is made of waterproof material.

The material of inner bag 20 is flexible. While inner bag 20 has a box shape in the example of FIGS. 5 to 7, 9, and 10, inner bag 20 does not necessarily has this shape and may have a flexible shape, such as a pouch. Inner bag 20 may be made of resin with, for example, high heat resistance, flame retardancy, flexibility, and wear resistance; for example, a polyolefin-based resin or a polyethylene-based resin such as a polyethylene terephthalate (PET) resin may be used. Alternatively, heat-shrink tubing configured to contract when heated may be used.

Inner bag 20 includes check valve 22 configured to block external moisture while venting internal gas.

### Protective Sheet 30

A surface of inner bag 20 is covered with protective sheet 30. In the example illustrated in FIGS. 6 to 9, each of protective sheets 30 are bonded to a corresponding one of a pair of main surfaces of inner bag 20. Protective sheets 30 continuously cover the main surfaces and at least respective portions of the side surfaces of inner bag 20 that are connected to the main surfaces. As a result, the surfaces of inner bag 20 are protected by protective sheets 30.

Protective sheet 30 is made of elastic material. Elastic inner bag 20 provided between the outer surface of flexible inner bag 20 and the inner surface of outer casing 10 protects inner bag 20, and battery module 2 accommodated in inner bag 20. Specifically, inner bag 20 and battery module 2 are protected from external forces, such as impact and vibration. Furthermore, tearing of flexible inner bag 20 due to impact, vibration, or the like can be minimized. Protective sheet 30 is made of insulating material, for example, a heat-resistant or flame-retardant rubber sheet or the like. A chloroprene rubber (CR) sheet may be preferably used.

### Battery Module 2

As illustrated in FIGS. 3, 4, and 10, battery module 2 is accommodated in inner bag 20. Battery module 2, which is also referred to as a core pack or the like, includes circuit board 3, a battery block accommodating secondary battery cells 1 therein. Moreover, spacers 40 are bonded to a surface of battery module 2, as illustrated in FIGS. 10 to 13.

The battery block includes battery holder 5. Battery holder 5 is divided into sub-holders 5a which hold secondary battery cells 1 between sub-holders 5a. In the example illustrated in FIGS. 3, 4, 14, and 15, a lot of cylindrical secondary battery cells 1 are held upright while accommodated in battery holder 5. Secondary battery cells 1 are connected in series or parallel to one another via, e.g., lead plate 4. The number of secondary battery cells connected in series or parallel to one another may be arbitrarily set according to the required specifications. In the example illustrated in FIGS. 14 and 15, battery module 2 includes 112 secondary battery cells 1 arranged in a 14-series, 8-parallel configuration; however, this configuration is not limiting. Furthermore, battery module 2 may include battery blocks each including secondary battery cells 1 accommodated therein.

Battery holder 5 includes housing tubes 6 configured to individually accommodate secondary battery cells 1. In the example illustrated in FIG. 15, battery holder 5 is vertically divided, such that secondary battery cells 1 are vertically interposed between the divided halves of housing tubes 6. The number of sections of each battery holder into which the battery holder is divided is not limited to two and may alternatively be three or more. Battery holder 5 may be made of highly insulating resin, such as polycarbonate.

### Secondary Battery Cell 1

A secondary battery cell having a cylindrical or prismatic external profile can be used as secondary battery cell 1. In the example illustrated in FIGS. 3, 4, and 15, cylindrical secondary battery cells 1 are placed vertically and arranged in a staggered pattern when in use. The number and arrangement of secondary battery cells 1 are not limited to this example and may be set to any number, and arrangement as appropriate. For example, cylindrical secondary battery cells may be arranged in a matrix.

Each secondary battery cell 1 includes positive and negative electrodes. The positive and negative electrodes are preferably disposed on respective one end surface of secondary battery cell 1. Existing secondary batteries such as lithium-ion secondary batteries, nickel-hydrogen batteries, and nickel-cadmium batteries can be used for secondary battery cells 1, as appropriate.

### Gas Exhaust Valve

A gas exhaust valve is disposed on an outer covering can of each secondary battery cell 1. The gas exhaust valve is configured to open in response to an increase in the internal pressure of the outer covering can, and to release gas inside the outer covering can to the outside of the can. The gas exhaust valve is disposed on one cell end surface of secondary battery cell 1. In the example illustrated in FIG. 15, the gas exhaust valve is disposed on the end surface on which the positive electrode of secondary battery cell 1 is located.

### Gas Exhaust Port 13

Outer casing 10 includes, at a portion thereof, gas exhaust port 13 through which when the gas exhaust valve of secondary battery cell 1 opens to discharge a high-pressure gas, the high-pressure gas is released to the exterior. In the example illustrated in FIG. 2, gas exhaust port 13 is disposed on the rear side of lower casing 12 of outer casing 10. While gas exhaust port 13 has a rectangular shape in the example, the shape of gas exhaust port 13 is not limited to a rectangular shape and may alternatively have a polygonal shape, such as an octagon, a hexagon, or a quadrangle, a circular shape, a racetrack shape, an oval shape, or the like.

Lead plate 4 is disposed on a main surface of battery holder 5. Battery holder 5 further includes, on the main surface, guide wall 7 positioning lead plate 4 at a position where lead plate 4 is to be secured.

### Lead Plate 4

Lead plate 4 connects the plurality of secondary battery cells 1 in series or parallel to one another by connecting the electrodes on the end surfaces of secondary battery cells 1 to one another. In the example illustrated in FIGS. 13 and 14, lead plate 4 connects the end surfaces of 112 secondary battery cells 1 such that secondary battery cells 1 are connected in a 14-series, 8-parallel configuration. The number and arrangement of secondary battery cells and the number of secondary battery cells connected in series or parallel to one another are not limited to this example and may be set to any number and arrangement, as appropriate. Lead plates 4 are made of highly conductive metal sheets, such as aluminum or nickel sheets.

An insulating sheet may be disposed on an end surface of lead plate 4. The insulating sheet is sized to cover the entire surface of lead plate 4. The insulating sheet is partially open as contact windows through which the electrode portions of lead plate 4 are exposed. This insulating sheet is made of highly insulating and fire-resistant material, such as mica.

### Circuit Board 3

As illustrated in FIGS. 13 and 14, battery module 2 is connected to circuit board 3 via lead plates 4. Circuit board 3 has mounted thereon, for example, a charge/discharge circuit configured to charge and discharge secondary battery cells 1 and a protection circuit configured to monitor the voltage and temperature of secondary battery cells 1 to interrupt the electric current in an abnormal condition. Circuit board 3 is made of a glass epoxy board. The battery pack may further include a board holder configured to hold circuit board 3.

### Spacer 40

Spacer 40 is disposed on a main surface of battery holder 5. Spacer 40 is disposed between outer casing 10 and battery module 2. As illustrated in FIG. 4, spacer 40 forms a space between the inner surface of outer casing 10 and the main surface of battery holder 5. The space functions as gas exhaust space GS through which discharging gas released from the gas exhaust valve. Spacer 40 is made of heat-resistant material. Consequently, even if a high-temperature, high-pressure gas is discharged from the gas exhaust valve, spacer 40 avoids immediate melting due to high heat, thereby maintaining gas exhaust space GS. Spacer 40 may be made of chloroprene rubber (CR).

Spacer 40 is made of flexible material. This configuration ensures that even when an external force is applied to battery pack 100, spacer 40 can absorb the external force to protect battery holder 5.

Spacer 40 is preferably disposed on cell end surface 1b out of the gas exhaust valve among the cell end surfaces of the secondary battery cell 1 on which the gas exhaust valve is not provided. If spacer 40 is disposed on cell end surface 1a on which the gas exhaust valve is disposed, a high-temperature, high-pressure gas discharged from the gas exhaust valve is obstructed by spacer 40, and is prevented from being smoothly discharged to the outside, leading to a rupture due to an increase in the internal pressure of the outer covering can. Thus, spacers 40 disposed not on avoiding cell end surface 1a including the gas exhaust valve ensure that even if a high-temperature, high-pressure gas is discharged from the gas exhaust valve, spacers 40 are prevented from obstructing the gas release, allowing the smooth gas release to be maintained while adding spacers 40 to battery holder 5.

Spacer 40 is fixed to the main surface of battery holder 5 via an adhesive layer. A double-sided tape may be used for the adhesive layer. Spacer 40 may be fixed with, e.g., an adhesive.

Spacer 40 is preferably fixed to the main surface of battery holder 5 along guide wall 7. Thus, guide wall 7 for positioning lead plate 4 can also be used for positioning spacer 40.

Spacers 40 continuously cover the cell end surfaces of secondary battery cells 1 arranged continuously while the cell end surfaces are fluish with one another. Therefore, spacer 40 is formed according to the stacking pattern of the secondary battery cells 1. For example, spacer 40 has a wavy shape in a plan view, as illustrated in FIG. 16.

Spacers 40 are spaced apart from each other while fixed to the main surface of battery holder 5, as illustrated in FIGS. 11 and 12. Furthermore, spacers 40 preferably have an identical shape on the main surfaces of battery holder 5. In addition, spacers 40 on the main surfaces are preferably mirror-symmetrical. This configuration allows identical spacers 40 to be used on both sides by inverting spacers 40, thereby reducing the number of components required for the assembly of battery pack 100.

Spacer 40 extends on the main surface of battery holder 5 so as to cover the continuous cell end surfaces. Spacer 40 forms a space between an end of the main surface of battery holder 5 and spacer 40. In this configuration, the space is formed without completely partitioning the main surface of battery holder 5 by spacer 40. If gas is discharged from the gas exhaust valve, the gas discharged along the main surface of battery holder 5 is prevented from being blocked by spacer 40, allowing the smooth gas release to be maintained while adding spacers 40 to battery holder 5.

Spacer 40 protects inner bag 20. Spacer 40 is formed as a continuous strip on the main surface of battery holder 5 to cover the continuous cell end surfaces. The cell end surface located at the outermost end is preferably uncovered with spacer 40. Thus, the cell end surface at the outermost end is uncovered while providing a watertight seal by accommodating battery holder 5 in inner bag 20, and inner bag 20 is prevented from rupturing due to excessive load thereon.

Protective sheet 30 covers cell end surface 1a including the gas exhaust valve thereon. Protective sheet 30 covering battery holder 5 to enhance impact resistance is used to cover cell end surface 1a including the gas exhaust valve thereon. Even if a high-temperature, high-pressure gas is discharged from the gas exhaust valve on any of secondary battery cells 1, the protective sheet suppresses immediate discharge of the gas from the battery pack to prevent flames caused by the ignition of the gas from directly leaking to the exterior of the battery pack.

In battery packs, a gas exhaust valve disposed on an outer covering can opens when a high-pressure gas is generated inside the outer covering can due to the occurrence of an anomaly in any of secondary battery cells accommodated in an outer casing. A structure is required that allows the high-pressure gas released to the interior of the outer casing to be safely discharged from the outer casing to the exterior.

However, implementing such a structure has been challenging. Particularly, recent battery packs require minimizing size and weight while simultaneously achieving cost reductions, which has made it difficult to allocate the necessary space, and budget for adding a safe gas discharge structure. In contrast, in accordance with the present embodiment, protective sheet 30 for enhancing impact resistance reduces the occurrence of flame leakage while maintaining gas exhaust space GS.

### First Opening 31

Protective sheet 30 has first openings 31 which are open. Cell end surfaces 1b on which the gas exhaust valves are not disposed are partially exposed through first openings 31 of protective sheet 30, as illustrated in FIG. 7. Consequently, if a high-temperature, high-pressure gas is discharged from the gas exhaust valve on any of secondary battery cells 1, the gas is not directly discharged from cell end surface 1a including the gas exhaust valve thereon, but the gas is discharged after moving to the position of another cell end surface 1b, that is, the position at which first opening 31 is disposed; thus, the gas flow path is extended to reduce gas velocity and temperature, and the gas is expected to be discharged to the exterior more safely.

Some of cell end surfaces 1b not including the gas exhaust valves thereon are exposed from spacers 40 through first openings 31 of protective sheet 30. In FIG. 7, spacers 40 disposed inside inner bag 20 are indicated by dashed lines. This configuration balances gas restriction and discharge while protective sheet 30 covers cell end surfaces 1a including the gas exhaust valves thereon to reduce the occurrence of flame leakage.

Spacer 40 is thicker than protective sheet 30 in order to form gas exhaust space GS. Meanwhile, protective sheet 30 is designed with a low profile to facilitate bonding to the surface of inner bag 20 while minimizing the thickness of battery module 2.

### Second Opening 32

Protective sheet 30 has second openings 32 therein along the boundary between the main surface and a side surface connected to the main surface, as illustrated in FIG. 8. Thus, second openings 32 spaced from one another along the boundary line between the main surface and the side surface, protective sheet 30 made of elastic material and resists bending is readily folded, as illustrated in FIG. 9.

Second openings 32 are preferably smaller than first openings 31. Thus, the increased area for first openings 31, which primarily serve to discharge gas, allows the gas to be smoothly discharged.

### Third Opening 33

Protective sheet 30 preferably has third openings 33 therein at positions corresponding to check valve 22 of inner bag 20, as illustrated in FIG. 8. This configuration allows the gas generated inside inner bag 20 to be discharged to the exterior through check valve 22 and third openings 33.

Third openings 33 are preferably smaller than second openings 32. Thus, the area of first openings 31 for an urgent discharge of abruptly generated gas is larger than the area of third openings 33 for discharging a relatively small amount of gas, allowing the gas to be smoothly discharged.

The above example has described the battery pack as being used as a power supply for electric scooters; however, the present disclosure is not limited thereto, and the battery pack may be used in other applications by being mounted on an electrical device to be driven and supplying electric power to the electrical device. Examples of the electrical device include movable bodies such as an electric vehicle and an electric cart, and portable electrical devices. When the remaining capacity of the battery pack becomes low or when the battery pack degrades over time, the electrical device can continue to be used by replacing the battery pack. Note that the present disclosure is not limited to a replaceable battery pack in which a secondary battery cell is mainly accommodated; the present disclosure may also be applied to an embodiment in which a secondary battery cell is accommodated in the casing of an electrical device. The battery pack according to the present disclosure refers to those in which, as the minimum standard, a secondary battery cell is accommodated in a casing; thus, examples of the battery pack include those in which a secondary battery cell for driving is embedded in the casing of an electrical device itself. In other words, the present disclosure can be applied not only to a replaceable battery pack, but also to an electrical device with a secondary battery cell embedded therein.

### INDUSTRIAL APPLICABILITY

A battery pack according to the present invention can be suitably used as a power supply for driving movable bodies such as an electric scooter, an electric cart, and a power-assisted bicycle, a power supply for radios, a power supply for portable electrical devices such as an electric cleaner and an electric tool, a backup power supply for servers, etc., or a stationary energy storage device for homes, offices, and factories.

### REFERENCE SIGNS LIST

100 battery pack
1 secondary battery cell
1a cell end surface provided with gas exhaust valve
1b cell end surface free of gas exhaust valve
2 battery module
3 circuit board
4 lead plate
5 battery holder
5a sub-holder
6 housing tube
7 guide wall
10 outer casing
11 upper casing
12 lower casing
13 gas exhaust port
20 inner bag
22 check valve
30 protective sheet
31 first opening
32 second opening
33 third opening
40 spacer
GS gas exhaust space

## Claims

1. A battery pack comprising:
a plurality of secondary battery cells including cell end surfaces provided at opposite ends of the plurality of secondary battery cells;
a battery holder including a main surface and holding the plurality of secondary battery cells;
an outer casing accommodating the battery holder therein; and
a spacer disposed on the main surface of the battery holder and between the outer casing and the main surface, the spacer being resistant to heat, wherein
the cell end surfaces include a plurality of first cell end surfaces including gas exhaust valves thereon and a plurality of second cell end surfaces not including gas exhaust valves thereon, the gas exhaust valves being configured to open in response to an increase in internal pressures of the plurality of secondary battery cells, and
the spacer occupies a portion of a space between an inner surface of the outer casing and the main surface of the battery holder, and a remaining portion of the space includes a gas exhaust space for discharging gas released from the gas exhaust valves.

2. The battery pack according to claim 1, wherein the spacer is made of flexible material.

3. The battery pack according to claim 1, wherein the spacer is disposed on at least one cell end surface out of the plurality of second cell end surfaces.

4. The battery pack according to claim 3, further comprising
a protective sheet covering the spacer and the main surface of the battery holder, wherein
the protective sheet continuously covers the main surface of the battery holder and at least a portion of a side surface of the battery holder connected to the main surface, and
the protective sheet covers the plurality of first cell end surfaces.

5. The battery pack according to claim 4, wherein the protective sheet has at least one first opening provided therein, and at least one of the plurality of second cell end surfaces on which the spacer is not disposed is exposed from the protective sheet through the at least one first opening.

6. The battery pack according to claim 1, further comprising:
a lead plate connecting the cell end surfaces of the plurality of secondary battery cells to one another, wherein
the battery holder includes a guide wall provided on the main surface of the battery holder, the guide wall positioning the lead plate at a position where the lead plate is fixed, and
the spacer is fixed to the main surface of the battery holder along the guide wall.

7. The battery pack according to claim 1, wherein the spacer has a wavy shape in a plan view.

8. The battery pack according to claim 1, wherein the spacer is one of a plurality of spacers, and the plurality of spacers are spaced apart from one another and fixed to the main surface of the battery holder.

9. The battery pack according to claim 8, wherein the spacer extends on the main surface of the battery holder to cover the plurality of second cell end surfaces adjacent to each other such that the spacer forms a space between the spacer and an end of the main surface of the battery holder.

10. The battery pack according to claim 9, further comprising:
an inner bag covering an outer periphery of the battery holder inside the outer casing, the inner bag being waterproof, wherein
the spacer is disposed inside the inner bag.

11. The battery pack according to claim 1, wherein
the spacer is shorter than a width of the battery holder in a lateral direction of the battery holder, and
the spacer forms a space between an edge of the main surface of the battery holder and an end of the spacer.

12. The battery pack according to any one of claims 1 to 11, wherein the spacer is fixed to the main surface of the battery holder via an adhesive layer.

13. The battery pack according to any one of claims 1 to 11, wherein the spacer is made of a heat-resistant rubber sheet.

14. The battery pack according to any one of claims 1 to 11, wherein the spacer is made of a chloroprene-based rubber sheet.

15. The battery pack according to any one of claims 1 to 11, wherein the spacer has an identical shape on each of a plurality of the main surfaces of the battery holder.
